# EUROPEAN PATENT APPLICATION

(11) **EP 4 675 706 A1**
(43) Date of publication of application: **07.01.2026**
(21) Application number: 24793026.6
(22) Date of filing: 18.04.2024
(51) Int. Cl.: H01M 4/505, H01M 4/525, C01G 53/00, H01M 10/0525, H01M 4/02

(54) **POSITIVE ELECTRODE ACTIVE MATERIAL, AND POSITIVE ELECTRODE AND LITHIUM SECONDARY BATTERY COMPRISING SAME**

(30) Priority: 18.04.2023 KR 20230050981; 17.04.2024 KR 20240051382
(71) Applicant: LG Energy Solution, Ltd., Seoul 07335 (KR)
(72) Inventor: HAN, Gi Beom, Daejeon 34122 (KR); PARK, Kang Joon, Daejeon 34122 (KR); LEE, Youshin, Daejeon 34122 (KR); LEE, Jaeyoung, Daejeon 34122 (KR); PARK, Byungchun, Daejeon 34122 (KR); PARK, Sin Young, Daejeon 34122 (KR)
(74) Representative: Hoffmann Eitle
(86) International application number: PCT/KR2024/005202
(87) International publication number: WO 2024/219841

(57) **Abstract**

A positive electrode active material includes a lithium-rich manganese-based oxide represented by Formula 1, wherein a sulfur content of the positive electrode active material is 4,000 ppm or more based on a total weight of the positive electrode active material. A method for preparing the positive electrode active material, a positive electrode including the positive electrode active material, and a lithium secondary battery including the positive electrode active material are also provided.

## Description

### [TECHNICAL FIELD]

### Cross Citation with Related Application(s)

The present application is a national phase entry under 35 U.S.C. § 371 of International Application No. PCT/KR2024/005202 filed April 18, 2024, which claims priority from Korean Patent Application No. 10-2023-0050981 filed on April 18, 2023, and Korean Patent Application No. 10-2024-0051382 filed on April 17, 2024, in the Korean Intellectual Property Office, the disclosures of which are incorporated herein by reference in their entirety.

The present disclosure relates to a manganese-rich positive electrode active material that attains improvement in lifetime characteristics by adjusting the content of S-based impurities present on the surface thereof, and a preparation method thereof, a positive electrode and a lithium secondary battery comprising the positive electrode active material.

### [BACKGROUND]

Lithium secondary batteries are energy storage media that have been applied in various fields since they were commercially introduced in 1991. As the market for products equipped with lithium secondary batteries expands, research to increase the energy density of lithium secondary batteries has been actively conducted. One of the methods that is attracting the most attention is developing a positive electrode active material with a composition that can utilize a larger amount of lithium than before.

As a positive electrode active material that can utilize a larger amount of lithium, lithium-rich transition metal oxide having a layered structure and having a molar ratio of lithium to transition metal of more than 1 have been developed. Since such a lithium-rich transition metal oxide achieves capacity by simultaneously utilizing not only the cation redox reaction of the transition metal but also the anion redox reaction using oxygen in the positive electrode structure, it can achieve high capacity. Typical lithium-rich transition metal oxides currently being actively studied include lithium-rich manganese-based oxides in which the molar ratio of lithium to transition metal is more than 1 and the content of manganese in the total transition metal is more than 50 mol% (hereinafter, referred to as Mn-rich and lithium-rich manganese-based oxide).

However, the Mn-rich and lithium-rich manganese-based oxide has low rate characteristics, that is, high resistance characteristics, and therefore, it is mainly produced in the form of secondary particles in which primary particles are mainly aggregated in order to reduce the lithium migration distance and thus lower diffusion resistance. However, when the calcination temperature is increased to improve structural stability, the size of the primary particles increases, which cannot improve the resistance. Therefore, there is a need for a technology that can increase the calcination temperature, thereby not growing the size of primary particles at a certain level or higher while enhancing structural perfection.

### [Prior Art Literature]

### [Patent Literature]

Korean Unexamined Patent Publication No. 2019-0052103 A

### [DETAILED DESCRIPTION OF THE INVENTION]

### [Technical Problem]

It is an object of the present disclosure to provide a positive electrode active material that is adjusted so that S-based impurities remain at a certain level or higher on the surface during synthesis of the positive active material, thereby not growing the size of primary particles at a certain level or higher while enhancing structural perfection, and a preparation method thereof.

### [Technical Solution]

According to one aspect of the present disclosure, there is provided a positive electrode active material comprising:
a lithium-rich manganese-based oxide represented by the following Formula 1,
wherein sulfur content is 4,000 ppm or more based on the total weight of the positive electrode active material:

   [Formula 1] Li₁₊ₐ[Mn_{1-(a+b+c)}Ni_{b}M_{c}]O₂
wherein in Formula 1,
M is at least one selected from the group consisting of Co, Fe, Cr, V, Cu, Zn, Ti, Al, Mg, B, W, Ga, In, Ru, Nb, Sn, Sr and Zr, and
0.1≤a≤0.5, 0≤b<0.5, 0≤c≤0.1, and 0≤a+b+c≤0.5.

According to another aspect of the present disclosure, there is provided a method for preparing the above-mentioned positive electrode active material, the method comprising the steps of:
forming precursor particles for a positive electrode active material by coprecipitating a transition metal-containing solution including sulfate or sulfide of nickel and manganese, an ammonium cation complex-forming agent, and a basic compound while supplying them to a reactor;
preparing a precursor for a positive electrode active material by washing the precursor particles for the positive electrode active material with water; and
mixing the precursor for the positive electrode active material and lithium raw material and calcinating the mixture at 800°C to 950°C.

According to another aspect of the present disclosure, there is provided a positive electrode for a lithium secondary battery comprising the above-mentioned positive electrode active material.

According to yet another aspect of the present disclosure, there is provided a lithium secondary battery comprising: the above-mentioned positive electrode; a negative electrode containing a negative electrode active material; a separator interposed between the positive electrode and the negative electrode; and an electrolyte.

### [Advantageous Effects]

The present disclosure provides a method for preparing a positive electrode active material including Mn-rich and lithium-rich manganese oxide having low rate characteristics, wherein the method can adjust the content of sulfur-based impurities without requiring a separate additional process, thereby enhancing structural stability and inhibiting excessive growth of primary particles.

The positive electrode active material prepared in this manner has the advantage of having excellent resistance and capacity characteristics because the lithium migration distance is short and diffusion resistance is low.

### [BRIEF DESCRIPTION OF THE DRAWINGS]

FIG. 1 shows photographs of the positive electrode active material particles prepared in Example 1 and Comparative Example 1 observed through a scanning electron microscope (SEM) at a magnification of 50k.
FIG. 2 shows photographs of the positive electrode active material particles prepared in Example 1 and Comparative Example 1 observed through a scanning electron microscope (SEM) at a magnification of 20k.
FIG. 3 shows photographs of the positive electrode active material particles prepared in Example 1 and Comparative Example 1 observed through a scanning electron microscope (SEM) at a magnification of 5k.

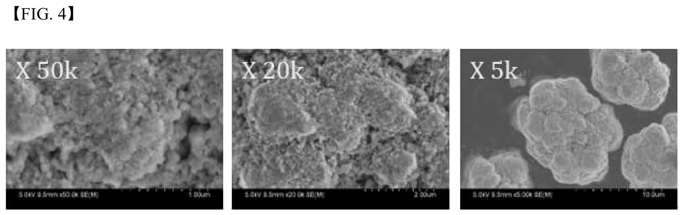

FIG. 4 shows photographs of the positive electrode active material particles prepared in Comparative Example 2 observed through a scanning electron microscope (SEM) at magnifications of 5k, 20k, and 50k, respectively.

### [DETAILED DESCRIPTION]

Hereinafter, aspects of the present disclosure will be described in detail.

The positive electrode active material including Mn-rich and lithium-rich manganese-based oxide having a manganese content of more than 50 mol% of all metals excluding lithium has the advantage of not only having a high energy density but also being able to reduce the amount of expensive cobalt used, thereby reducing preparation costs, as compared to currently commercialized lithium nickel cobalt manganese(NCM)-based active materials.

However, Mn-rich positive electrode materials have the disadvantage of having high resistance and low rate characteristics because the oxidation/reduction reactions of oxygen ions and Mn ions proceed relatively slowly. Therefore, improvement thereof is absolutely required in order to commercialize lithium secondary batteries using Mn-rich positive electrode materials.

In this regard, the present inventors confirmed that during the preparation of a positive electrode active material including Mn-rich and lithium-rich manganese-based oxide, the precursor is washed only with water that does not contain a separate flux material in the precursor washing process, whereby the remaining sulfur content can be adjusted to 4,000 ppm or more based on the total weight of the positive electrode active material, thereby reducing the resistance characteristics while enhancing the structural perfection of the positive electrode active material.

Specifically, when the heat treatment temperature is increased in the step of mixing and heat-treating the precursor for the positive electrode active material and the lithium raw material during the preparation of the positive electrode active material, the crystallinity of the particles becomes excellent and the degree of completion of calcination becomes high. However, in the case of lithium-rich manganese-based oxide, there is a problem that the size of primary particles is increased due to the high heat treatment temperature, which causes an increase in resistance. At this time, if the sulfur content in the positive electrode active material is 4,000 ppm or more, the process of growing primary particles is hindered, thereby being able to prevent excessive growth of primary particles due to heat treatment at high temperature.

In other words, by increasing the calcination temperature, it is possible to prevent the growth of primary particles while securing the crystal size above a certain level. Therefore, while maintaining the form of the secondary particles in which the primary particles are aggregated, the migration distance of lithium ions is shortened and diffusion resistance can be lowered.

In the present disclosure, the sulfur may be present in the form of, for example, metal sulfate (MeSO₄), and the sulfur content refers only to the content of S element among them.

In the present disclosure, "sulfur content" means the content of sulfur element in the positive electrode active material obtained through ICP analysis, and specifically, it means that 0.1 g of the positive electrode active material to be analyzed was mixed with 2 mL of distilled water and 1 mL of concentrated nitric acid, diluted with 50 mL of deionized water, and then analyzed using an ICP-OES (PERKIN-ELMER, Optima 7300DV) instrument.

In the present disclosure, "primary particle" means a particle in which, apparently, no grain boundary is present when observing the particle in a field of view of 5000 to 20000 magnification using a scanning electron microscope, and "secondary particle" is a particle that is formed by aggregating a plurality of primary particles.

In the present disclosure, "average particle diameter of primary particles" means an arithmetic average value calculated after measuring particle diameters of at least 20 primary particles observed in a scanning electron microscope image. At this time, the particle diameter means the longest axis diameter of the primary particles.

In the present disclosure, "D₅₀" means a particle size corresponding to 50% of a cumulative volume in the volume cumulative particle size distribution of a particle powder to be measured, and can be measured using a laser diffraction method. For example, D₅₀ may be determined by dispersing a positive electrode active material powder in a dispersion medium, introducing the resultant dispersion to a commercially available laser diffraction particle size analyzer (e.g. Microtrac S3500), irradiating ultrasonic waves of about 28 kHz at an output of 60 W to obtain a graph of volume cumulative particle size distribution, and then determining the particle size corresponding to 50% of the cumulative volume.

In the present disclosure, "crystallite" means a particle unit having substantially the same crystal orientation, which can be confirmed by EBSD (Electron Backscatter Diffraction) analysis. Specifically, it is the smallest particle unit that appears in the same color in an IPF map obtained by EBSD analysis of a cross section of a positive electrode active material cut by ion milling.

Meanwhile, in the present disclosure, "average crystallite size" can be quantitatively analyzed using X-ray diffraction analysis (XRD) by Cu Kα X-rays. Specifically, the average crystal size of the crystal grains can be quantitatively analyzed by placing the particles to be measured in a holder, radiating the particles with X-rays, and analyzing the resulting diffraction grating. Sampling was performed by placing a powder sample of the particles to be measured in a mid-recessed groove of a general powder holder, smoothing the surface using a slide glass, and setting the sample height equal to the holder edge. X-ray diffraction analysis was then performed under the conditions of FDS 0.5°, a step size of 0.02° in the range of 2θ = 15° ~90°, and the total scan time of about 20 minutes using a Bruker D8 Endeavor (light source: Cu Kα, λ = 1.54 Å) equipped with LynxEye XE-T position sensitive detector. Rietveld refinement of the measured data is performed, considering the charge at each site (metals at transition metal site +3, Ni at Li site +2) and cation mixing. In crystallite size analysis, instrumental broadening is considered using Fundamental Parameter Approach (FPA) implemented in Bruker TOPAS program, and in fitting, all peaks in the measurement range are used. The peak shape fitting is only performed using Lorentzian contribution to First Principle (FP) among peak types available in TOPAS, and in this instance, strain is not considered.

In the present disclosure, the "BET specific surface area" is calculated by a BET (Brunauer-Emmett-Teller) multipoint method from the nitrogen adsorption isotherm under a 77K liquid nitrogen atmosphere obtained using BELSORP-MAX (MicrotracBEL Corp.).

### Positive electrode active material

A positive electrode active material according to the present disclosure comprises: a lithium-rich manganese-based oxide represented by the following Formula 1, wherein sulfur content may be 4,000 ppm or more, preferably 4,000 ppm to 8,000 ppm, and more preferably 5,000 ppm to 7,000 ppm, based on the total weight of the positive electrode active material:

[Formula 1] Li₁₊ₐ[Mn_{1-(a+b+c)}Ni_{b}M_{c}]O₂

wherein in Formula 1,
M is at least one selected from the group consisting of Co, Fe, Cr, V, Cu, Zn, Ti, Al, Mg, B, W, Ga, In, Ru, Nb, Sn, Sr and Zr, and
0.1≤a≤0.5, 0≤b<0.5, 0≤c≤0.1, and 0≤a+b+c≤0.5.

As mentioned above, if the sulfur content in the positive electrode active material is 4,000 ppm or more, it is possible to prevent excessive growth of primary particles even during high temperature heat treatment. However, if the sulfur content becomes too high, the problem of capacity reduction due to an increase in the impurity ratio may become more serious, and so the sulfur content must be adjusted taking this point into consideration.

Meanwhile, in Formula 1, the a is the molar ratio of Li in the lithium-rich manganese-based oxide, and may be 0.1 ≤ a ≤ 0.5, 0.1 ≤ a ≤ 0.4, or 0.12 ≤ a ≤ 1.17. When a satisfies the above range, high capacity can be achieved.

The b is the molar ratio of Ni in the lithium-rich manganese-based oxide, and may be 0≤b<0.5, 0.1 ≤b≤0.4, or 0.25≤b≤0.35.

The c is the molar ratio of the doping element M in the lithium-rich manganese-based oxide, and may be 0≤c≤0.1, 0≤c≤0.05, or 0≤c≤0.01. The doping element M may preferably be Co, and if the content of the doping element is too high, it may not only adversely affect the capacity of the active material, but also increase the oxygen-oxidation-reduction reaction, which may worsen the generation of gas and the degeneration of the positive electrode active material, thereby deteriorating the lifetime characteristics.

The 1-(a+b+c) is the molar ratio of Mn in the lithium-rich manganese-based oxide, and may be 0≤a+b+c ≤ 0.5, 0 ≤ a+b+c<0.5, or 0.35≤a+b+c ≤ 0.45. If a+b+c is more than 0.5, that is, if 1-(a+b+c) is less than 0.5, the proportion of the rock-salt phase becomes too small and thus the effect of structural stability improvement is slight.

Preferably, in Formula 1, 0.1 ≤a≤0.4, 0.1≤b≤0.4, 0≤c≤0.05, 0≤a+b+c<0.5, and more preferably, 0.12≤a ≤ 0.17, 0.25 ≤ b ≤ 0.35, 0 ≤ c ≤ 0.01, and 0.35 ≤ a+b+c ≤ 0.45.

Meanwhile, in the lithium-rich manganese-based oxide represented by Formula 1, the ratio (Li/Me) of the number of moles of Li to the number of moles of all metal elements excluding Li may be 1.1 to 1.5, preferably 1.1 to 1.4, more preferably 1.12 to 1.17. When Li/Me ratio satisfies the above range, rate characteristics and capacity characteristics can excellently exhibit. When Li/Me ratio is too high, electrical conductivity may decrease, and the rock-salt phase (Li₂MnO₃) may increase, which may increase the degradation rate. When Li/Me ratio is too low, the effect of improving energy density is slight.

However, in the case of lithium-rich manganese-based oxide containing excessive lithium, it has a structure in which a layered phase (LiM'O₂) and a rock-salt phase (Li₂MnO₃) are intermingled. The composition of the lithium-rich manganese-based oxide may be represented by the following Formula 2.

[Formula 2] X Li₂MnO₃·(1-X)Li[Ni_{1-y-z}Mn_{y}M_{z}]O₂

wherein in Formula 2,
M may be at least one selected from the group consisting of Co, Fe, Cr, V, Cu, Zn, Ti, Al, Mg, B, W, Ga, In, Ru, Nb, Sn, Sr and Zr, and
0.1≤X≤0.5, 0.4≤y<1, and 0≤z≤0.2.

The X refers to the ratio of the Li₂MnO₃ phase in the lithium-rich manganese-based oxide, and the y and z means the molar ratio of Mn and the doping element M on the LiM'O₂ layer.

On the other hand, the positive electrode active material according to the present disclosure may further include a coating layer on the surface of the lithium-rich manganese-based oxide, if necessary. When the positive electrode active material includes a coating layer, contact between the lithium-rich manganese-based oxide and the electrolyte is suppressed by the coating layer, and side reactions of the electrolyte are reduced, thereby capable of obtaining the effect of improving lifetime characteristics

The coating layer may include a coating element M¹, and the coating element M¹ may be, for example, at least one selected from the group consisting of Al, B, Co, W, Mg, V, Ti, Zn, Ga, In, Ru, Nb, Sn, Sr and Zr, preferably, Al, Co, Nb, W, and a combination thereof, and more preferably, Al, Co, and a combination thereof. The coating element M¹ may include two or more types, for example, Al and Co.

The coating element may be present in the coating layer, in oxide form, i.e., M¹Oz (1≤z≤4).

The coating layer can be formed through methods such as dry coating, wet coating, chemical vapor deposition (CVD), physical vapor deposition (PVD), and atomic layer deposition (ALD). Among these, it is preferable to form it through atomic layer deposition in that the coating layer can be formed to have a wider area.

The formation area of the coating layer may be 10 to 100%, preferably 30 to 100%, and more preferably 50 to 100%, based on the total surface area of the lithium-rich manganese-based oxide particles. When the formation area of the coating layer satisfies the above range, the effect of improving lifetime characteristics is excellent.

On the other hand, the positive electrode active material according to the present disclosure may be in the form of secondary particles in which a plurality of primary particles are aggregated, and the average particle size of the primary particles may be 0.01 µm to 5 µm, preferably 0.01 µm to 2 µm, more preferably 0.01 µm to 0.1 µm. In order to improve structural stability, the average particle size of primary particles increases while performing calcination at a certain temperature or higher, but if the average particle diameter of the primary particles is more than 5 µm, diffusion resistance increases as the lithium migration distance become long, which is not preferable.

In addition, the D₅₀ of the positive electrode active material, i.e., the D₅₀ of the secondary particles, may be 2 µm to 15 µm, preferably 2 µm to 13 µm, more preferably 5 µm to 12 µm. When the D₅₀ of the positive electrode active material satisfies the above range, excellent electrode density can be achieved, and degradation of capacity and rate characteristics can be minimized.

Further, the average crystallite size of the positive electrode active material may be 20 nm to 150 nm, preferably 20 nm to 100 nm, and more preferably 60 nm to 100 nm. From the viewpoint of enhancing the crystallinity, it is preferable that the average crystallite size is large, but considering the increase in resistance resulting therefrom, it is preferable that the average crystallite size does not exceed 150 nm.

Further, the BET specific surface area of the positive electrode active material may be 0.1 m²/g to 10 m²/g, specifically 1 m²/g to 6 m²/g, and more specifically 1.2 m²/g to 3 m²/g. If the BET specific surface area of the positive electrode active material is too low, the reaction area with the electrolyte is insufficient, making it difficult to achieve sufficient capacity. If the specific surface area is too high, moisture absorption is rapid and side reactions with electrolytes are accelerated, making it difficult to secure lifetime characteristics.

### Method for preparing positive electrode active material

A method for preparing the positive electrode active material according to the present disclosure comprises the steps of: forming precursor particles for a positive electrode active material by coprecipitating a transition metal-containing solution including sulfate or sulfide of nickel and manganese, an ammonium cation complex-forming agent, and a basic compound while supplying them to a reactor; preparing a precursor for a positive electrode active material by washing the precursor particles for the positive electrode active material with water; and mixing the precursor for the positive electrode active material and lithium raw material and calcinating the mixture at 800°C to 950°C.

In the step of forming precursor particles for a positive electrode active material, the precursor particles may be prepared, for example, by a method which includes dissolving each transition metal-containing raw material in a solvent to prepare a transition metal-containing solution, mixing the transition metal-containing solution, an ammonium cation complex-forming agent, and a basic compound, and then subjecting the mixture to a coprecipitation reaction. In addition, if necessary, an oxidizing agent or oxygen gas may be further added during the coprecipitation reaction.

Meanwhile, the transition metal-containing raw material may be acetate, carbonate, nitrate, sulfate, halide, sulfide, and the like of each transition metal. However, the transition metal-containing solution of the present disclosure includes sulfate or sulfide of nickel and manganese. Specifically, the transition metal-containing raw material may be NiO, NiCO₃·2Ni(OH)₂·4H₂O, NiC₂O₂·2H₂O, Ni(NO₃)₂·6H₂O, NiSO₄, NiSO₄·6H₂O, nickel sulfide, Mn₂O₃, MnO₂, Mn₃O₄, MnCO₃, Mn(NO₃)₂, MnSO₄·H₂O, manganese acetate, manganese halide, manganese sulfide, and the like. The transition metal-containing solution includes at least one selected from the group consisting of NiSO₄, NiSO₄·6H₂O, nickel sulfide, MnSO₄·H₂O, and manganese sulfide.

The ammonium cation complex-forming agent may be at least one selected from the group consisting of NH₄OH, (NH₄)₂SO₄, NH₄NO₃, NH₄Cl, CH₃COONH₄, and (NH₄)₂CO₃.

The basic compound may be at least one selected from the group consisting of NaOH, Na₂CO₃, KOH, and Ca(OH)₂. The form of the precursor may vary depending on the type of the basic compound used. For example, when NaOH is used as a basic compound, a hydroxide form of the precursor can be obtained, and when Na₂CO₃ is used as a basic compound, a carbonate form of the precursor can be obtained. Further, when a basic compound and an oxidizing agent are used together, an oxide form of the precursor can be obtained.

Meanwhile, the precursor for a positive electrode active material may be in the form of a hydroxide, oxide, or carbonate.

In one aspect of the present disclosure, the step of washing the precursor particles for the positive electrode active material with water may be performed using deionized water, and it is preferable not to add any other substances besides water during washing. In a typical precursor washing step, a flux material such as NaOH is used, but in this case, the sulfur content hardly remains above 4,000 ppm.

Specifically, the washing is preferably performed by stirring the precursor particles at 1,000 rpm to 3,000 rpm at a temperature of 20°C to 30°C for 10 minutes so that a weight ratio of the precursor and water is adjusted to 2:1 to 10:1. After the washing, drying can be performed by filtering and exposing to a temperature of 100°C to 150°C for 5 to 15 hours.

Meanwhile, as the lithium raw material, for example, lithium-containing carbonates (e.g., lithium carbonate, etc.), hydrates (e.g., lithium hydroxide hydrate (LiOH·H₂O), etc.), hydroxides (e.g., lithium hydroxide, etc.), nitrates (e.g., lithium nitrate (LiNO₃), etc.), chlorides (e.g., lithium chloride (LiCl), etc.), and the like can be mentioned, and among these, one type alone or a mixture of two or more types can be used.

Meanwhile, the precursor for the positive electrode active material and the lithium raw material may be used in amounts such that the molar ratio of total transition metals (Ni+Co+Mn):Li is 1:1.1 to 1:1.5, preferably 1:1.1 to 1:1.4, more preferably 1:1.12 to 1:1.17.

Meanwhile, the calcination may be performed at a temperature of 800°C to 950°C, preferably 850°C to 950°C, and more preferably 870°C to 920°C. When the calcination temperature is 800°C or higher, structural perfection can be improved, but it is preferable not to exceed 950°C in order to prevent excessive growth of primary particles. The calcination time may be 5 to 20 hours, preferably 10 to 15 hours. In addition, the calcination atmosphere may be an air atmosphere or an oxygen atmosphere, for example, an atmosphere containing oxygen at 20 to 100% by volume.

Generally, when the calcination temperature is increased to 800°C or higher during the preparation of a positive electrode active material including Mn-rich and lithium-rich manganese-based oxide, there is a problem that the primary particle size increases excessively and the resistance increases, but this can be prevented when 4,000 ppm or more of sulfur remains on the surface as in the present disclosure.

### Positive electrode and lithium secondary battery

A positive electrode according to the present disclosure comprises the positive electrode active material, and a lithium secondary battery according to the present disclosure comprises the positive electrode; a negative electrode containing a negative electrode active material; a separator interposed between the positive electrode and the negative electrode; and an electrolyte.

The positive electrode according to the present disclosure and the lithium secondary battery comprising the same can be produced by a conventional method for producing a positive electrode and a lithium secondary battery in the art, except for using the positive electrode active material described above.

For example, a lithium secondary battery can be produced by interposing a separator between a positive electrode containing a positive electrode active material and a negative electrode containing a negative electrode active material, sequentially stacking and drying them to prepare an electrode assembly, inserting the electrode assembly into a case, and injecting an electrolyte and sealing the case. The lithium secondary battery may be cylindrical, prismatic, coin-shaped, or pouch-shaped batteries.

The positive electrode and the negative electrode may be produced by coating a composition for forming an active material layer including an electrode active material onto a current collector and then drying the coating.

The composition for forming the positive electrode active material layer may, in addition to the positive electrode active material, optionally further include a binder, a conductive material, a filler, and the like, if necessary. The composition for forming the negative electrode active material layer may, in addition to the negative electrode active material, optionally further include a binder, a conductive material, a filler, and the like, if necessary.

The current collector is not particularly limited as long as it has high conductivity without causing a chemical change in the battery, and, for example, copper, stainless steel, aluminum, nickel, titanium, calcinated carbon, or copper or stainless steel of which surface is treated with carbon, nickel, titanium, silver, or the like, an aluminum-cadmium alloy, or the like may be used. Further, the current collector may generally have a thickness of 3 µm to 500 µm. Also, the current collector may have fine protrusions and depressions formed on a surface thereof to enhance adherence of an active material. For example, the current collector may be used in various forms such as a film, a sheet, a foil, a net, a porous body, a foaming body, and a non-woven fabric structure.

The positive electrode may further include a typical positive electrode active material in addition to the positive electrode active material described above, and for example, it may further include any one or more positive electrode active materials selected from the group consisting of LCO(LiCoO₂), LNO(LiNiO₂), LFP(LiFePO₄) and NCM(Li[NiₚCo_{q}Mnᵣ₁]O₂, 0 < p < 1, 0 < q < 1, 0< r1 < 1, p+q+r1=1), but preferably, only the positive electrode active material may be used alone.

The positive electrode active material may be included in an amount of 80% to 99% by weight based on the total weight of the positive electrode active material layer.

In one aspect of the present disclosure, the negative electrode may include, as a negative electrode active material, at least one selected from the group consisting of a carbon-based material; a silicone-based material; metal or an alloy of lithium and the metal; a metal composite oxide; a material which may be doped and undoped with lithium; lithium metal; and a transition metal oxide, and preferably, it may include a carbon-based material, a silicon-based material, or a mixture thereof.

As the carbon-based material, any carbon-based negative electrode active material generally used in a lithium secondary battery may be used without particular restrictions, and, as a typical example, crystalline carbon, amorphous carbon, or both thereof may be used. Examples of the crystalline carbon may include graphite such as amorphous, planar, flaky, spherical or fibrous natural graphite or artificial graphite, and examples of the amorphous carbon include soft carbon (low-temperature calcined carbon), hard carbon, mesophase pitch carbide, and calcined cokes.

The silicon-based material is at least one selected from Si, SiOₓ (0<x<2), and a Si-Y alloy (where Y is an element selected from the group consisting of alkali metal, alkaline earth metal, a Group 13 element, a Group 14 element, transition metal, a rare earth element, and a combination thereof, and is not Si), and SiO is preferred. Silicon-based negative electrode active materials have a capacity nearly 10 times higher than that of graphite, and can lower the mass loading (mg-cm⁻²) to improve the rapid charging performance of batteries.

As the metal or the alloy of lithium and the metal, a metal selected from the group consisting of Cu, Ni, Na, K, Rb, Cs, Fr, Be, Mg, Ca, Sr, Si, Sb, Pb, In, Zn, Ba, Ra, Ge, Al and Sn, or an alloy of lithium and the metal may be used.

As the metal composite oxide, at least one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃(0≤x≤1), LiₓWO₂(0≤x≤1), and SnₓMe₁₋ₓMe'_{y}O_{z} (where, Me is Mn, Fe, Pb, Ge; Me': Al, B, P, Si, Group I, II and III elements of the periodic table, halogen; 0<x≤1; 1≤y≤3; 1≤z≤8) may be used.

The material which may be doped and undoped with lithium may include Sn, SnO₂, Sn-Y (wherein Y is an element selected from the group consisting of an alkali metal, an alkaline earth metal, a Group 13 element, a Group 14 element, a transition metal, a rare earth element, and a combination thereof, and is not Sn), or the like, and at least one of these may be mixed and used with SiO₂.

In the Si-Y and Sn-Y, the element Y may be elected from the group consisting of Mg, Ca, Sr, Ba, Ra, Sc, Y, Ti, Zr, Hf, Rf, V, Nb, Ta, Db (dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

Examples of the transition metal oxide may include lithium-containing titanium composite oxide (LTO), vanadium oxide, lithium vanadium oxide, or the like.

The negative electrode active material may be included in an amount of 80 wt.% to 99 wt.% based on the total weight of solids in the negative electrode slurry.

The binder is a component that assists in the binding between the conductive material, the active material, and the current collector, and is added in an amount of 0.1 wt.% to 10 wt.% based on the total weight of the active material layer. Examples of the binder may include polyvinylidene fluoride (PVDF), polyvinyl alcohol, carboxymethylcellulose (CMC), starch, hydroxypropyl cellulose, regenerated cellulose, polyvinylpyrrolidone, tetrafluoroethylene, polyethylene, polypropylene, ethylene-propylene-diene polymer (EPDM), a sulfonated-EPDM, a styrene-butadiene rubber, a nitrile-butadiene rubber, a fluoro rubber, various copolymers thereof, or the like.

The conductive material is a component for further improving the conductivity of the active material, and may be added in an amount of 10 wt.% or less, specifically 5 wt.% or less based on the total weight of the active material layer. Such a conductive material is not particularly limited as long as it has conductivity without causing a chemical change in the battery, and, for example, graphite such as natural graphite or artificial graphite; carbon black such as acetylene black, Ketjen black, channel black, furnace black, lamp black, or thermal black; conductive fibers such as carbon fibers or metal fibers; metal powders such as carbon fluoride, aluminum, and nickel powders; conductive whiskers such as zinc oxide whiskers and potassium titanate whiskers; conductive metal oxide such as titanium oxide; a conductive material such as polyphenylene derivatives, and the like may be used.

Meanwhile, in the lithium secondary battery, the separator separates the negative electrode and the positive electrode and provides a movement path for lithium ions, and any separator may be used as the separator without particular limitation as long as it is typically used in a lithium secondary battery, and particularly, a separator having high moisture-retention ability for an electrolyte as well as low resistance to the transfer of electrolyte ions is preferable. Specifically, a porous polymer film, for example, a porous polymer film prepared from a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Further, a typical porous nonwoven fabric, for example, a nonwoven fabric formed of glass fiber having a high melting point, polyethylene terephthalate fiber, or the like may be used. Furthermore, a coated separator including a ceramic component or a polymer material may be used to secure heat resistance or mechanical strength, and may be selectively used in a single-layered or a multilayered structure.

In addition, the electrolyte may include an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

Specifically, the electrolyte may include an organic solvent and a lithium salt.

Any organic solvent may be used without particular limitation as long as it can serve as a medium through which ions involved in an electrochemical reaction of a battery can move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic hydrocarbon group having 2 to 20 carbon atoms, and may include a double-bond aromatic ring or ether bond); amides such as dimethylformamide; dioxolanes such as 1,3-dioxolane; sulfolanes, or the like can be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), which can increase charging/discharging performance of a battery, is more preferable.

The lithium salt can be used without particular limitation as long as it may provide lithium ions used in a lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻. As the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂, or the like can be used. The lithium salt may be used in a concentration range of 0.1 M to 2.0 M. When the concentration of the lithium salt is included within the above range, the electrolyte has suitable conductivity and viscosity, thereby exhibiting excellent electrolyte performance, and lithium ions can effectively move.

In addition to the electrolyte components, to improve the lifetime characteristics of a battery, suppress the decrease in battery capacity, and improve the discharge capacity of the battery, the electrolyte may further contain one or more kinds of additives of, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like. At this time, the additive may be included in an amount of 0.1 to 5 wt.% based on a total weight of the electrolyte.

Hereinafter, the present disclosure will be described in more detail with reference to specific examples.

### <Example: Preparation of positive electrode material>

### Example 1.

4 liters of distilled water was put in a coprecipitation reactor (capacity 20 L), the temperature was maintained at 50°C, and 100 mL of ammonia aqueous solution with a concentration of 28 wt.% was added. Then, a transition metal solution in which NiSO₄ and MnSO₄ were mixed in amounts such that a molar ratio of nickel: manganese was 35:65, an aqueous ammonia solution, and a sodium hydroxide solution were put in the coprecipitation reactor, and subjected to a coprecipitation reaction to form precursor particles. The precursor particles were separated, stirred at 2,000 rpm at a temperature of 25°C for 10 minutes so that a weight ratio of precursor and deionized water was adjusted to 5:1, washed with water, and then dried in an oven at 130°C to prepare a precursor.

The precursor synthesized through coprecipitation reaction and LiOH were mixed so that the molar ratio of transition metal: Li was 1:1.3, and the mixture was heat-treated at 900°C for 15 hours under an oxygen atmosphere to prepare a positive electrode active material having a composition of Li_{1.13}Ni_{0.31}Mn_{0.56}O₂. The prepared positive electrode active material had an average particle diameter of 0.05 µm for primary particles, a D₅₀ of 10 µm for secondary particles, an average crystallite size of 80 nm, and a BET specific surface area of 1.5 m²/g.

### Comparative Example 1.

A positive electrode active material was prepared in the same manner as in Example 1, except that 1M NaOH aqueous solution was used instead of deionized water at the time of washing the precursor particles in Example 1. The positive electrode active material prepared in Comparative Example 1 had an average particle diameter of 0.2 µm for primary particles, a D₅₀ of 10 µm for secondary particles, an average crystallite size of 80 nm, and a BET specific surface area of 1.0 m²/g.

### Comparative Example 2.

A positive electrode active material was prepared in the same manner as in Example 1, except that 0.5M NaOH aqueous solution was used instead of deionized water at the time of washing the precursor particles in Example 1. The positive electrode active material prepared in Comparative Example 2 had an average particle diameter of 0.1 µm for primary particles, a D₅₀ of 10 µm for secondary particles, an average crystallite size of 80 nm, and a BET specific surface area of 1.2 m²/g.

### Example 2.

A positive electrode active material was prepared in the same manner as in Example 1, except that in Example 1, the precursor coprecipitation reaction time was controlled to a level where the D₅₀ value of the precipitated precursor was at the 3 µm level, and the weight ratio of the precursor and deionized water at the time of washing the precursor particles was changed from 5:1 to 2:1. The positive electrode active material prepared in Example 2 had an average particle diameter of 0.05 µm for primary particles, a D₅₀ of 3 µm for secondary particles, an average crystallite size of 80 nm, and a BET specific surface area of 2.5 m²/g.

### Comparative Example 3.

A positive electrode active material was prepared in the same manner as in Example 2, except that 0.5M NaOH aqueous solution was used instead of deionized water at the time of washing the precursor particles in Example 2. The positive electrode active material prepared in Comparative Example 3 had an average particle diameter of 0.1 µm for primary particles, a D₅₀ of 3 µm for secondary particles, an average crystallite size of 80 nm, and a BET specific surface area of 1.7 m²/g.

### Comparative Example 4.

A positive electrode active material was prepared in the same manner as in Example 2, except that 1M NaOH aqueous solution was used instead of deionized water at the time of washing the precursor particles in Example 2. The positive electrode active material prepared in Comparative Example 4 had an average particle diameter of 0.2 µm for primary particles, a D₅₀ of 3 µm for secondary particles, an average crystallite size of 80 nm, and a BET specific surface area of 1.4 m²/g.

### [Experimental Example]

### Experimental Example 1. Measurement of S content in positive electrode active material

0.1 g of the positive electrode active material powder prepared in Examples 1 to 2 and Comparative Examples 1 to 4 was mixed with 2 mL of distilled water and 1 mL of concentrated nitric acid, then diluted with 50 mL of deionized water, and then the content of sulfur element was measured using ICP-OES (PERKIN-ELMER, Optima 7300DV) instrument. The results are listed in Table 1 below.

**[Table 1]**

| Example 1 | Example 2 | Comparative Example 1 | Comparative Example 2 | Comparative Example 3 | Comparative Example 4 |
|---|---|---|---|---|---|
| 6,000 ppm | 6500 ppm | 1,500 ppm | 3,000 ppm | 3,000 ppm | 2,000 ppm |

### Experimental Example 2. SEM analysis

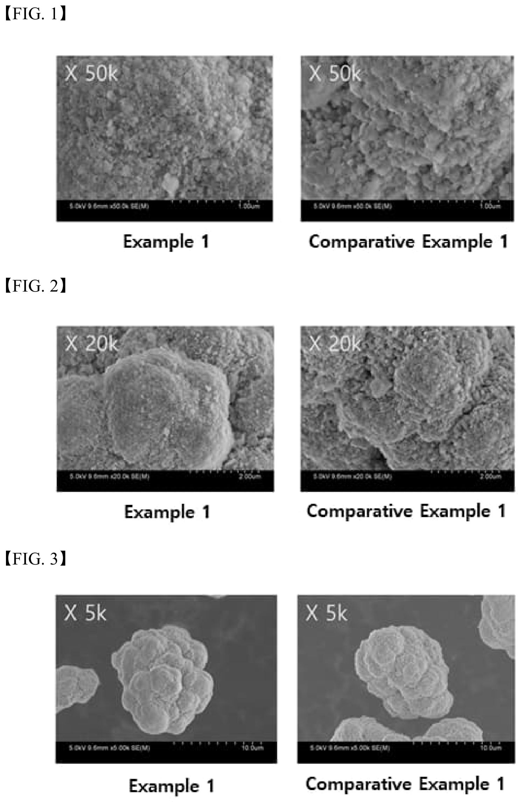

Photographs of the positive electrode active materials prepared in Example 1 and Comparative Examples 1 to 2 observed through a scanning electron microscope(SEM) at magnifications of 50k, 20k, and 5k were shown in FIGS. 1 to 3.

It can be seen from the photographs that the positive electrode active material of Comparative Examples 1 to 2 consists of larger primary particles than the positive electrode active material of Example 1.

### Experimental Example 3: Evaluation of coin cell performance

### 1) Production of Positive Electrode

The positive electrode active material of Example 1, a conductive material (carbon black), and a binder (polyvinylidene fluoride) were added to N-methyl-2-pyrrolidone (NMP) at a weight ratio of 94:3:3 to prepare a positive electrode slurry with a solid content of 60 wt.%. The positive electrode slurry was coated to a thickness of 45 µm onto a 15 µm thick aluminum (Al) thin film, which is a positive electrode current collector, dried, and then roll-pressed to produce a positive electrode with a loading capacity of 2.8 mAh/cm². In the same way, the positive electrodes using the positive electrode active materials of Example 2 and Comparative Examples 1 to 4 were also produced, respectively.

### 2) Production of Coin Cells

A negative electrode active material (graphite), a binder (SBR-CMC), and a conductive material (carbon black) were added to water as a solvent at a weight ratio of 95:3.5:1.5 to prepare a negative electrode slurry with a solid content of 60 wt.%. The negative electrode slurry was coated onto a 10 µm thick copper (Cu) thin film, which is a negative electrode current collector, to a thickness of 67 µm, dried, and then roll-pressed to produce a negative electrode with a loading capacity of 3.0 mAh/cm².

For each of the positive electrode of Examples 1 to 2 and the positive electrode of Comparative Examples 1 to 4 produced in 1) above, a 15 µm thick polyethylene-based separator was interposed between the positive electrode and the negative electrode to prepare an electrode assembly. The electrode assembly was then located inside a coin-type (2032 type) secondary battery case, and then the electrolyte solution was injected into the case to produce a lithium secondary battery. In this case, as the electrolyte solution, an electrolyte solution prepared by dissolving 1 M LiPF₆ in a mixed organic solvent of ethylene carbonate (EC): ethylmethyl carbonate (EMC) in a volume ratio of 1:2 was injected to produce a lithium secondary battery.

### 3) Lifetime Evaluation

After the coin cell to which the positive electrode active materials of Examples 1 to 2 and Comparative Examples 1 to 4 were applied was formatted at 45°C, the coin cell was charged at a rate of 0.5C to a voltage of 4.4V in a CCCV mode at 25°C. Then, the coin cell was discharged at a constant current of 0.5C to a voltage of 2.5V to measure initial discharge capacity and initial resistance. While proceeding 50 cycles of charge and discharge, the discharge capacity retention and resistance increase rate were measured, and the results are shown in Table 2 below.

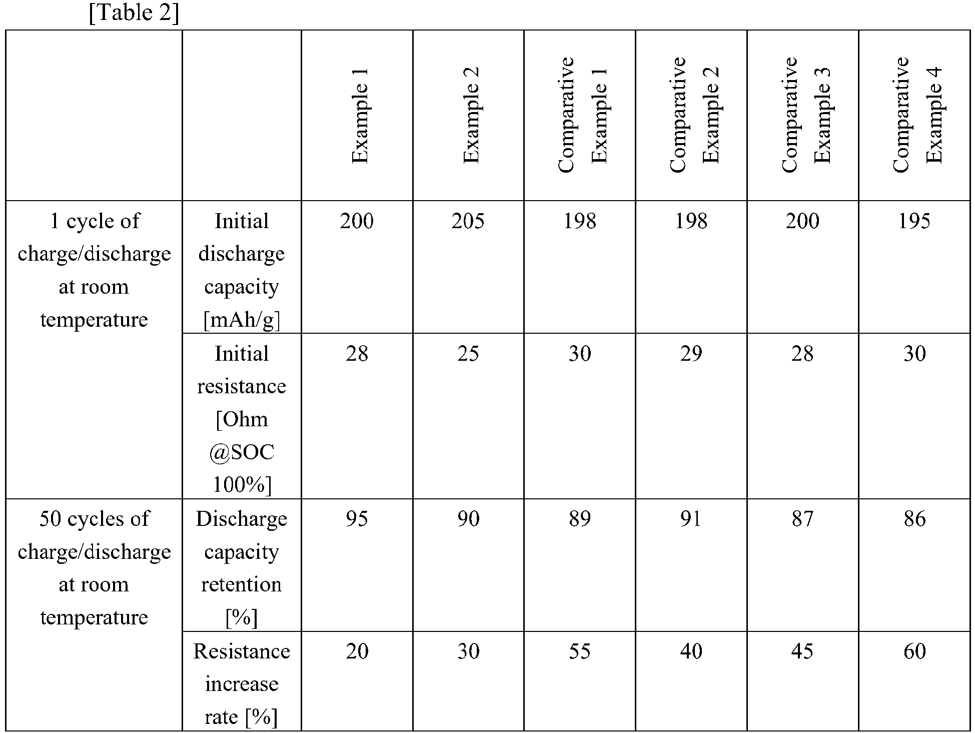

Through the results in Table 2, it can be confirmed that the coin cell using the positive electrode active material of Examples 1 to 2 in which the content of sulfur element in the positive electrode active material was 4,000 ppm or more exhibited improved values in terms of initial capacity and initial resistance, compared to the coin cell using the positive electrode active material of Comparative Examples 1 to 4 in which the content of sulfur element was less than 4,000 ppm. This result demonstrates that even if the same calcination temperature was applied, when the content of sulfur in the positive electrode active material was adjusted, the crystallinity was improved, the growth of primary particles was inhibited, and the resistance increase was prevented. In addition, in terms of capacity retention and resistance increase rate after 50 cycles, the coin cell using the positive electrode active material of Examples 1 to 2 exhibited superior performance compared to the coin cell using the positive active material of Comparative Examples 1 to 4. This result demonstrates that as the primary particle size was controlled, the stress in the repeated charge-discharge process was reduced, and the capacity and resistance changes with cycle progression were improved.

## Claims

1. A positive electrode active material, comprising:
a lithium-rich manganese-based oxide represented by Formula 1,
wherein a sulfur content of the positive electrode active material is 4,000 ppm or more based on a total weight of the positive electrode active material:
[Formula 1] Li₁₊ₐ[Mn_{1-(a+b+c)}Ni_{b}M_{c}]O₂
wherein, in Formula 1,
M is at least one of Co, Fe, Cr, V, Cu, Zn, Ti, Al, Mg, B, W, Ga, In, Ru, Nb, Sn, Sr or Zr, and
0.1≤a≤0.5, 0≤b<0.5, 0≤c≤0.1, and 0≤a+b+c≤0.5.

2. The positive electrode active material of claim 1, wherein an average particle diameter of primary particles of the positive electrode active material ranges from 0.01 µm to 5 µm.

3. The positive electrode active material of claim 2, wherein the average particle diameter of the primary particles ranges from 0.01 µm to 0.1 µm.

4. The positive electrode active material of claim 1, wherein the positive electrode active material has a D₅₀ ranging from 2 µm to 15 µm.

5. The positive electrode active material of claim 1, wherein an average crystallite size of the positive electrode active material ranges from 20 nm to 150 nm.

6. The positive electrode active material of claim 1, wherein in Formula 1, 0.1≤a≤0.4, 0.1≤b≤0.4, 0≤c≤0.05, and 0≤a+b+c<0.5.

7. The positive electrode active material of claim 1, wherein the sulfur content ranges from 4,000 ppm to 8,000 ppm based on the total weight of the positive electrode active material.

8. A method for preparing the positive electrode active material of claim 1, comprising:
forming precursor particles for the positive electrode active material by coprecipitating a transition metal-containing solution including sulfate or sulfide of nickel and manganese, an ammonium cation complex-forming agent, and a basic compound while supplying the transition metal-containing solution, the ammonium cation complex-forming agent, and the basic compound to a reactor;
washing the precursor particles with water to form a precursor for the positive electrode active material; and
mixing the precursor and a lithium raw material to form a mixture and calcinating the mixture at a temperature ranging from 800°C to 950°C.

9. The method of claim 8, wherein no other substance besides water is added during the step of washing.

10. A positive electrode comprising the positive electrode active material according to claim 1.

11. A lithium secondary battery, comprising:
the positive electrode of claim 10;
a negative electrode containing a negative electrode active material;
a separator interposed between the positive electrode and the negative electrode; and
an electrolyte.
